# EUROPEAN PATENT SPECIFICATION

(11) **EP 1 628 839 B1**
(45) Date of publication and mention of the grant of the patent: **01.07.2009**
(21) Application number: 04735744.7
(22) Date of filing: 02.06.2004
(51) Int. Cl.: B44C 5/04, B32B 3/30, E04F 15/04

(54) **FLOOR PANEL AND METHOD FOR MANUFACTURING SUCH FLOOR PANEL**
FUSSBODENPANEEL UND HERSTELLUNGSMETHODE
PANNEAU DE SOL ET PROCEDE DE FABRICATION ASSOCIE

(30) Priority: 04.06.2003 BE 200300339; 11.06.2003 US 477326 P; 31.10.2003 BE 200300585
(43) Date of publication of application: 01.03.2006
(73) Proprietor: Flooring Industries Ltd., Dublin 1 (IE)
(72) Inventor: THIERS, Bernard, Paul, Joseph, B-9700 Eine (BE); DE BOE, Lode, Hubert, Lieven, B-8890 Moorslede (BE); VANHASTEL, Luc, Dirk, Dani¬l, B-8700 Tielt (BE)
(74) Representative: Donné, Eddy
(86) International application number: PCT/EP2004/006082
(87) International publication number: WO 2004/108436

(56) References cited:
- DE-A- 2 926 983
- GB-A- 2 054 458
- PATENT ABSTRACTS OF JAPAN vol. 1997, no. 01, 31 January 1997 (1997-01-31) & JP 8 230113 A (TOPPAN PRINTING CO LTD), 10 September 1996 (1996-09-10)
- PATENT ABSTRACTS OF JAPAN vol. 2003, no. 03, 5 May 2003 (2003-05-05) & JP 2002 337300 A (YAMAHA LIVINGTEC CORP), 27 November 2002 (2002-11-27)

## Description

This invention relates to a floor panel, as well as to a method for manufacturing such floor panel.

In particular, the invention relates to so-called laminate panels for forming a floor covering.

It is known that in such laminate panels for floors, the appearance of wood, more particularly parquetry or the like, or the appearance of stones or ceramic tiles, is imitated by providing the floor panels, in the proximity of their upper surface, with a decorative layer printed with a pattern, for example, a wood pattern or tile pattern, over which a transparent synthetic layer is provided.

Usually, the.printed decorative layer consists of printed paper, whereas the clear synthetic layer normally consists of a synthetic resin or one or more transparent or clear resin-impregnated material layers, for example, paper layers, in which possibly also products can be incorporated in order to enlarge, for example, the wear and tear resistance of the final upper surface. Generally, said synthetic layer, at least when it also forms the top layer or, thus, uppermost layer of the floor panel, is named "overlay".

It is also known to provide certain laminate panels with indentations and to provide an amount of paint, printing ink or the like in these indentations, in order to underline certain aspects of the pattern to be imitated.

A known technique for realizing this is described in DE 29 26 983. According to this known technique, a layer, impregnated in resin, is provided on top of the decorative layer, and subsequently the whole assembly is brought into a press, on one hand, in order to let the whole already partially harden, and, on the other hand, to realize indentations in the upper side during pressing. Subsequently, an amount of paint is doctored into the indentations, after which again a resin-impregnated layer is provided on top of the whole, and finally the whole is hardened completely by the influence of pressure and temperature. This technique has the disadvantage that it is complex and, consequently, time-consuming and that it must be performed rather precisely, in consideration of the fact that two layers must be provided on top of each other and care must be taken in particular that the intermediate hardening is performed to a proper degree. Another disadvantage consists in that one always has to work with at least two top layers, which can exert a disadvantageous influence on the clearness with which the pattern of the printed decorative layer finally is visible, and by which the pattern, formed by the paint in the indentations, is softened.

Thus, the complex and rather expensive procedure described in the German DE 29 26 983 is less suitable for producing larger volumes at a minimum cost price, as desirable in the production of floor panels.

Another known technique, which, amongst others, is described in GB 2,054,458, consists in that, during the formation of the indentations, also an amount of colour product, more particularly; ink, is printed onto the laminate, possibly into the indentations, by means of the press with which the indentations are formed. This known technique requires particularly expensive equipment for, during pressing the laminate panels, simultaneously performing a printing action, which renders this technique thus little suitable for the production of floor panels. As the colour product is provided during the formation of the indentations, as well as is formed by means of a printing process, moreover an appearance similar to printed matter is obtained, which renders the imitation effect less than optimum, at least for certain applications. As the ink is provided in the indentations during pressing, only very thin coatings can be obtained. Also, this technique is exclusively suitable for printing of larger deepened parts.

Other techniques are known from JP 08-230113 and JP 2002-337300, however these techniques do not offer a solution for imitating coloured wood.

Further, it is also known to apply techniques whereby the application of colour products on certain locations in recesses is coupled specifically to particular surface treatments, as a consequence of which the typical characteristics of the normal panel surface can not be guaranteed any longer.

The present invention aims at a floor panel whereby, on one hand, the advantages of classical laminate panels for floors are maintained, however, on the other hand, additional components can also be incorporated in the surface in an optimum manner. Furthermore, the invention aims at a floor panel which can be realized smoothly, with minimum production costs.

Specifically, the invention aims at a laminate panel which allows a good imitation of a patinated or coloured wooden floor.

To this aim, the invention relates to a floor panel as defined in claim 1.

In preferred embodiments, the invention also aims at a laminate panel, whereby one or more of the disadvantages of the above-discussed prior art are excluded.

Other features will become clear from the appended claims and corresponding description.

It is clear that due to the combination of the features mentioned in claim 1, the invention allows that particularly good imitations of post-treated, in particular coloured, for example, lime-treated, wooden floor parts or parquetry parts, sometimes also called "patinated" or "cerused" floor parts or parquetry, often in short denominated with the French term "cerusé", can be realized.

An obvious solution for imitating such coloured or "patinated" floor by means of laminate panels consists in providing the decorative layer with a printed pattern representing a patinated wooden floor part or parquetry part and subsequently applying a classical overlay on top thereof. Practice has shown that in such specific application, it is difficult to arrive at a good imitation of a really coloured wooden floor.

However, by providing the floor panels, in accordance with the present invention, on one hand, with a decorative layer printed with a wood pattern, and, on the other hand, with indentations in which a colour product is provided, a considerably better imitation can be realized. Hereby, the printed wood pattern either may consist of a traditional print, as the one applied for imitating a non-coloured floor, whereby the imitation effect of the coloration then is exclusively obtained by the colour product in the indentations, as well as of a particular print which indeed represents certain aspects of the coloration, whereby the imitation effect of the coloration then is obtained by the combination of the special print and the colour product in the indentations. According to the latter manner, by means of the print of the decorative layer at least the discoloration of a treated wood surface can be imitated, whereas by means of the colour product in the indentations, residual colour materials, which remain in the real pores or other recesses in the wood in a treatment of a real wooden floor, can be imitated.

Preferably, in order to imitate coloured, "patinated" or lime-treated wood, said component will consist of a colour product with a light colour, in particular white. However, colour products of another colour are not excluded. These colour products as such preferably are little or not at all transparent.

In accordance with claim 1 said indentations are provided in function of the wood pattern, and even better follow the lines of the wood pattern. Thereby it is obtained that the pattern created by the colour product is optimally adapted to the underlying printed pattern of the decorative layer.

In a preferred embodiment the floor panel is **characterized in that** said component is obtained in that it has been provided in those indentations after the provision of the indentations.

Further it is preferred that the panel comprises a top layer forming the upper surface of the floor panel, more particularly a so-called overlay, whereby this top layer, or thus, overlay is realized on the basis of a thermosetting resin, wherein said indentations are formed in said upper surface.

As the indentations are situated in the upper side of the floor panel, and this upper side, with the exception of the indentations, remains unchanged, the floor panels will keep their classical advantages in respect to wear resistance, cleaning features and the like at their surface which is walked upon. As said component is provided in the indentations, the former is little or not at all subject to wear and tear, in particular when said indentations are realized with relatively small dimensions. Due to the fact that said component is no longer covered by an additional overlay, the clarity of the pattern or such formed by said component is not affected by an overlay.

Preferably, the invention is applied in combination with floor panels having a top layer based on melamine resin, because such top layer as such , as is known, is very suitable for floor panels.

It is noted that the floor panels according to the invention can be provided at one or more of their upper edges with a cut-away material part in order to create a particular profile at those edges. By means of such cut-away part, for example, a so-called "chamfer" can be formed, or simply a rectangular recess, which, when laying several floor panels adjacent to each other, forms a groove. According to a particular embodiment of the present invention, in such case the surface created by cutting away said material part is provided, at least partially, with a finish, such that the appearance of the surface is adapted to the effect obtained by the colour product in said indentations.

Adapting the colour of the surface at the location where a part has been cut away to the colour of the applied component can be performed in any manner. To this aim, for example, a covering layer can be provided on this surface, said covering layer showing a matching colour or a matching pattern. For providing such covering layer, for example, use can be made of transfer printing, as described, amongst others, in the international patent application WO 01/96688.

According to a particular variant, however, said surface will be coloured at least partially with a colour product having the same tint or almost the same tint as the colour product used for said component. In a particular form of embodiment, even the same agent, for example, the same paint, shall be applied to this aim. The advantage of this technique consists in that the finish of said surface, in other words, the finish of the "chamfer", automatically is adapted to the upper surface of the floor panel in an optimum manner, contrary to a coating provided by means of transfer printing, as with transfer printing, separate materials are used which then specifically must be adapted to the upper surface of the floor panel.

According to a particular characteristic of the invention, said floor panel is provided with a coloured transparent top layer, in other words, a coloured "overlay".

Up to the present, overlays, at least in case they are applied in combination with a printed decorative layer, always are realized such that they, after the floor panel has been formed, thus, after curing, are as transparent as possible and also as colourless as possible, in order to thereby render the printed decorative layer optimally visible. To this aim, "overlays" then are formed of an in its turn very pure paper which is impregnated with resin. The pure paper itself as such is white, however, after impregnation with resin and after pressing the overlay, it becomes almost colourless.

By using, according to the invention, as aforementioned, a coloured "overlay", particular new effects can be realized. By a "coloured overlay", hereby an "overlay" is to be understood which, in applied condition, clearly gives the floor panel a certain tint, in other words, is not colourless. Hereby, such tint can be of any colour, including black or white.

Basically, such tint in the top layer or, thus, overlay, can be realized by using coloured paper for the paper carrier of the overlay, however, preferably the overlay or, thus, top layer shall be coloured in that this layer is formed on the basis of coloured resin. By colouring the resin itself, on one hand, a tint is obtained, however, on the other hand, the transparency of the overlay is little or not affected.

According to a particular form of embodiment, the coloured overlay is chosen such that, on one hand, this overlay, by means of its tint, and, on the other hand, said colour product present in the indentations, commonly contribute to a "patinating" or "colouring" effect. In such case, a classical imitated wood pattern can be used for the printed decorative layer; the coloured tint to be imitated, which is present over the entire surface, can be obtained by means of the coloured overlay; and the colour product present in the indentations can be used as an imitation of the colour product which normally in reality remains in the wood pores and the like.

Of course, such coloured overlay also can be used for creating other particular effects.

It is noted that the use of such coloured "overlays" allows to realize different final results, starting from one and the same printed decorative layer. In the case of the imitation of parquetry or wooden floor parts, for example, an imitation of a non-coloured floor then can be realized by means of a printed decorative layer with a clear overlay only, whereas, in case of an imitation of a coloured embodiment, one starts with one and the same printed decorative layer, which, however, in that case will be provided with a coloured overlay.

Preferably, the coloured overlay hereby is monochromatic and thus free of any well-defined fixed pattern, with the advantage that, when forming the boards of which the floor panels are realized, the overlay must not be especially positioned in respect to the possible pattern of the printed decorative layer.

Preferably, said indentations have a small dimension in at least one direction, more particularly a width which, for the major part of such indentations, is less than 2 mm and even better less than 1 mm. By using relatively small indentations, the component present in the indentations is not or almost not strained during the use of the floor panels.

According to a possible embodiment, in addition to the use of a colour product, also a component is used which comprises at least one active agent. By an active agent, each product has to be understood which renders well-defined features, other than features exclusively aiming at determining the appearance or forming a top layer. To this aim, products can be applied having, for example, one or more of said features: anti-bacterial, anti-static, dirt-repellent, mildew-repellent. The application of other active agents is not excluded. Another application consists, for example, in applying materials creating a certain optical effect, such as materials having reflecting and/or fluorescent and/or phosphorescent features.

The component in the indentations may also comprise particles which enhance wear resistance, such as corundum.

It is clear that according to the present invention, such products can be optimally utilized in combination with floor panels, on one hand, because said component is little or not at all strained when using the floor panel and thus is very little subject to wear and tear, and, on the other hand, the respective component still can be freely present at the upper surface and consequently can be optimally active.

It is clear that the application of an active agent as a component provided in the indentations also can be combined with the aforementioned colour product, for example, in that the active ingredients, such as anti-bacterial products, anti-static products or the like, are blended into the colour product.

The floor panels of the invention preferably are realized as DPL (Direct Pressure Laminate).

Said component present in the indentations preferably consists of a cured matter, such as a paint paste, a hardenable product containing active agents or the like, which matter preferably is created as a consequence of the fact that a certain amount thereof is brought into the indentations in that it is deposited therein, for example, rolled thereinto, wiped thereinto, doctored thereinto, sprayed thereinto or the like, contrary to high-pressure printing techniques.

It is noted that the above-described possibility of imitating a post-treated wooden floor or parquetry floor, more particularly, a wooden floor or parquetry floor coloured with colour substance or the like, by means of laminate panels, according to which use is made of a decorative layer printed with a wood pattern and of indentations provided with a colour product, also can be utilized in other kinds of laminate panels, regardless whether further intermediate layers and additional covering overlays are applied, regardless of how the component is provided in the indentations, regardless of the material of which the possible overlay consists, and regardless of the fact whether an overlay is applied or not.

It is noted that for laminate panels, the use of an active component, provided in parts which are deepened in respect to the upper surface, regardless whether those are indentations or not, and regardless of the further composition of the laminate panel, can be advantageous, as such deepened parts often allow the application of such active component in a better manner than in case such active component must be provided over the entire surface.

As already discussed, the deepened parts to be provided with the active component may consist of indentations, preferably local indentations of small dimensions. According to another important possibility, such deepened parts are formed by the surface of parts which are formed in that at the upper side of the floor panels, whether at the edge thereof or not, material parts have been removed, for example, the surface of a so-called "chamfer", the surface of a rectangular recess, and so on.

Also, the use of a coloured so-called overlay in combination with a printed decorative layer in its turn offers important advantages, amongst others, in that thereby a new technical structure is obtained which allows to realize new creations, more particularly patterns, appearances and the like. Also, the use of a coloured overlay offers the advantage that certain decors, the practical realization of which had been problematical before, now can be realized more adequately.

So, for example, it is known that it is difficult to realize very light decors, for example, so-called "cérusé", as well as very dark decors in a proper manner, as with the techniques known up to now, whereby the decor is determined substantially by the printed decorative layer, the richness of the obtained decor often is considerably less than intended.

Also, it is known that with very light or very dark decors, a large quantity of printing ink or other printing medium must be applied on the decorative layer in order to arrive at a proper appearance. On one hand, this poses the problem that such thick printing is difficult to perform. On the other hand, such thick printing results in that the decorative layer hardly takes up any resin and the necessary resin treatment or impregnation is rendered difficult. Also, this results in that more or less a layered structure is formed, as a lesser adhesion between the decorative layer and the overlay occurs, whereby, when milling the edges of the floor panels, pieces of the upper side may come off. The overlay is of course situated above the decorative layer, however, must not necessarily form the uppermost layer of the panel. In fact, it is not excluded to provide a clear colourless overlay on top of the coloured overlay.

This technique creates new possibilities.

One of those possibilities consists in that light or dark decors can be produced with a greater richness and with less problems by colouring the overlay with a light tint, for example, a white colour product, in the case of a light decor and colouring the overlay with a dark tint in the case of a dark decor. The inventor has found out that thereby rich decors can be realized without necessitating an extra thick print on the decorative layer, as a consequence of which the aforementioned disadvantages can be excluded.

According to a variant of the invention, instead of the aforementioned coloured overlays, also coloured resins can be used for impregnating the decorative layer, by which similar effects as described above can be realized. Also, a combination of, on one hand, the use of a decorative layer resin-treated with a coloured resin, and, on the other hand, the use of one or more coloured overlays is possible.

Finally, the invention also relates to a method for manufacturing a floor panel according to the invention, with the characteristic that this method comprises at least two main steps, on one hand, a first step wherein one or more basic layers, a decorative layer and a transparent so-called overlay, by means of a thermosetting synthetic material, are pressed together to a whole in a heated press, wherein, preferably simultaneously with pressing together, indentations are formed in the upper side, and on the other hand, a second step, wherein said component in the form of a colour product is brought into the indentations. This method allows for a particularly smooth production, with relatively low production costs and in a manner suitable for mass production.

It is clear that the decorative layer and overlay possibly can be united beforehand.

In a diverging form of embodiment of the aforementioned method, the overlay to be pressed is omitted and whether or not replaced by another layer, whereby the indentations then are formed in the resin of the resin-treated decorative layer or in said other layer.

Generally, the invention does not exclude that apart from the described layers, additional other layers can be applied.

With the intention of better showing the characteristics of the invention, hereafter, as an example without any limitative character, several preferred forms of embodiment are described, with reference to the accompanying drawings, wherein:
Figure 1 schematically represents a part of a floor covering which is composed of floor panels according to the invention;
figure 2 represents a floor panel according to the invention in plan view;
figures 3 and 4, at a larger scale, represent cross-sections according to lines III-III and IV-IV, respectively, in figure 2;
figure 5, at a larger scale, represents the part indicated by F5 in figure 3;
figures 6 to 11 represent different steps of the method according to the invention;
figure 12 schematically represents an entire process for realizing floor panels according to the invention; figures 13 to 16 represent a number of variants of the invention.

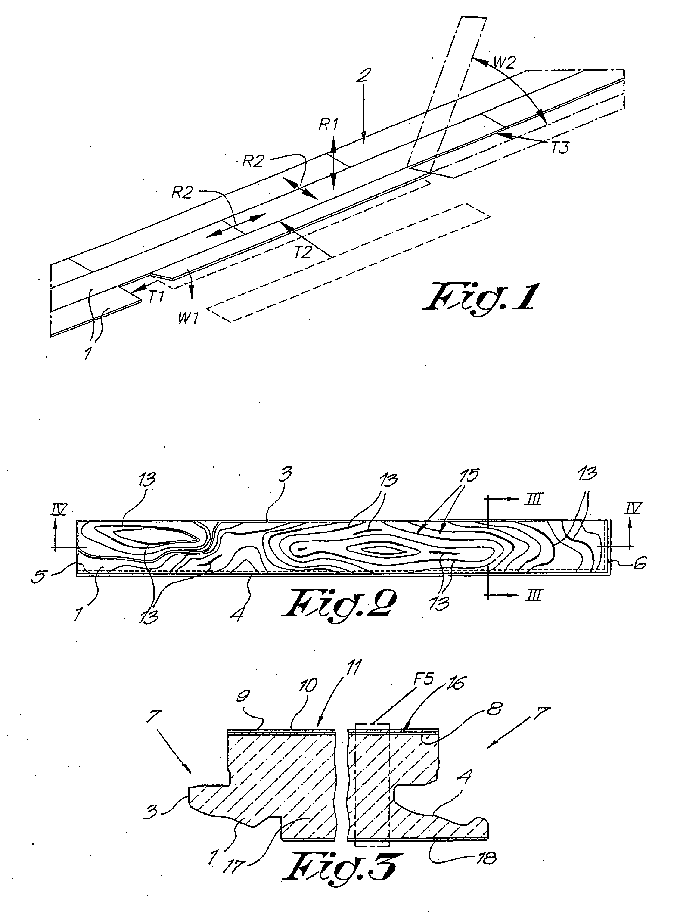

As represented in figures 1 and 2, the invention relates to floor panels 1, more particularly laminate panels, for forming a floor covering 2.

In the represented example, the floor panels 1 are rectangular, however, it is clear that according to variants not represented, they also can have another shape and can be, for example, square or polygonal, such as hexagonal or octagonal.

Preferably, the floor panels 1 are provided at least at two opposite edges 3-4, and even better, as represented in figures 2 to 4, at both pairs of edges 3-4, 5-6, respectively, with coupling means 7, by which several of such floor panels 1 can be mutually coupled, such that these coupling means 7, in coupled condition, offer a locking in vertical as well as horizontal directions.

Such coupling means 7, which, as known, allow to couple the floor panels 1 without glue, as well as uncouple them again, as such are well known from the state of the art and are described, amongst others, in the international patent applications WO 97/47834 and WO 94/26999. Also, it is known that such coupling means 7 can be realized in different forms and that in function of the applied form, the coupling of the floor panels 1 can be realized in different manners, for example, in such a manner that such floor panels 1 can be mutually coupled by means of translation movements T1 and/or T2 and/or T3 and/or turning movements W1 and/or W2, as schematically indicated in figure 1.

It is noted that the present invention, however, is not limited to floor panels 1 with coupling means 7 providing in a mechanical locking in the direction R1 and R2, however, as a matter of fact also can relate to floor panels 1 which, at one or more edges, are provided with other coupling means, for example, with a classical tongue and groove, which possibly can be glued into each other, or even can relate to floor panels 1 comprising no coupling means at one or more edges.

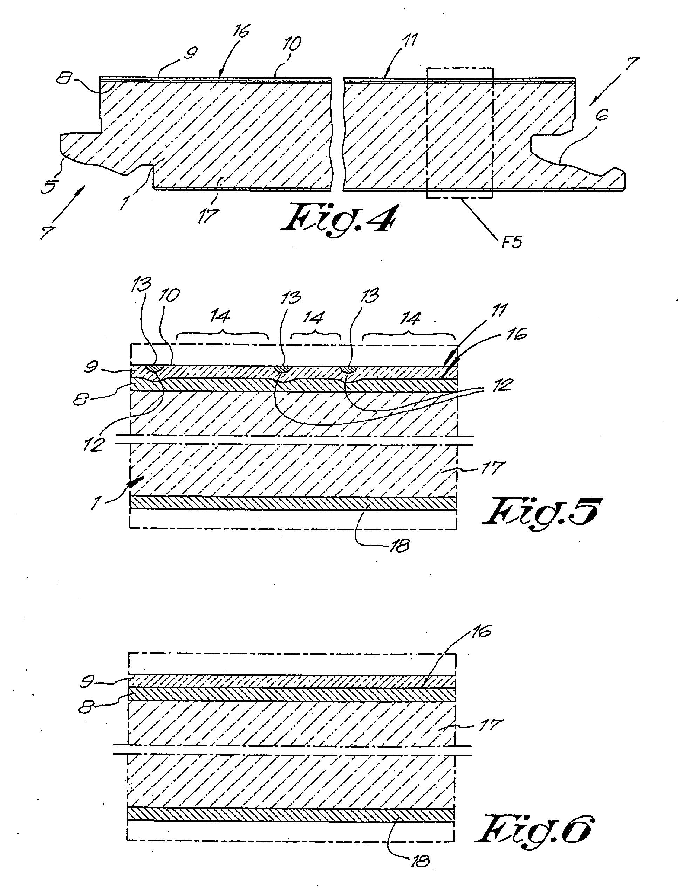

As explained in the introduction and as is shown in detail in the enlarged illustration of figure 5, the floor panel 1 is formed of a laminate panel comprising at least a printed decorative layer 8, as well as a top layer 9 forming the upper surface 10 of the floor panel 1, more particularly a so-called overlay, whereby this top layer or overlay 9 is realized on the basis of a thermosetting resin, and this floor panel further is
**characterized in that** in the upper side 11 of the floor panel 1, indentations 12 are formed and that at least in a number of these indentations 12, a component 13 in the form of a colour product is provided, said component being obtained by having been deposed in these indentations 12 after the provision of the indentations 12 themselves.

It is clear that in this manner, a floor panel 1 is obtained of which large parts 14 of the upper surface 10 still are formed by a top layer 9 which is realized on the basis of thermosetting resin, as a consequence of which the important advantages thereof are maintained, whereas, meanwhile, also said additional component 13 can be incorporated in the upper surface in an optimum manner, such for the purpose of realizing the effects described in the introduction.

The top layer 9 preferably is a layer based on melamine resin, which, for example, is formed of a carrier impregnated with such resin, such as a resin-impregnated paper.

It is noted that, according to a variant of the invention, it is also possible to make no use of a separate overlay. The top layer 9, in which the indentations are provided, then, for example, is formed by the resin with which the decorative layer itself is impregnated.

The printed decorative layer 8 is printed with a wood pattern 15, whereby this pattern then is situated at the upper side 16 of the decorative layer 8, or at least at the upper side of the carrier of this decorative layer 8.

The indentations 12 can have different forms and dimensions. The indentations 12 are provided in function of the printed pattern 15. By "provided in function of the printed pattern 15" is meant that the form and/or dimensions and/or direction according to which these indentations 12 extend, are adapted to the printed pattern 15. In this particular case whereby the pattern 15 consists of a wood pattern, this means that the indentations 12 follow the wood pattern, or follow it to a certain extent, as described in the WO 01/96689, as well as that the indentations 12 consist of randomly provided oblong indentations which, globally, seen, extend in the longitudinal direction of the imitated wood nerves, as this traditionally is applied for laminate parquetry.

The application of indentations 12 which are adapted to the pattern 15, in particular offers important utilization possibilities in the case that, such as claimed, the aforementioned component 13 consists of a colour product. By a "colour product", each agent is to be understood which is not colourless transparent, but results in a certain colour effect, including white or black. For such colour product, for example, use can be made of a paint, more particularly a water-based paint, or a paint in the form of an UV-hardening varnish. Also, it is not excluded to apply other substances, such as, for example, lime or the like.

As aforementioned, the aim of the claimed invention consists in imitating coloured or post-treated wooden floor parts or parquetry parts, often also called "patinated" wood or parquetry, in an efficient manner. In such case, the printed decorative layer 8 represents a wood pattern 15, whereas in the indentations 12, which are adapted to the wood pattern 15, a colour product is provided. Hereby, as schematically indicated in figure 2, it is obtained that the wood pattern 15 is visible through the transparent top layer 9 and possible other intermediate layers, whereas the component 13, which is situated in the proximity of the upper side 11 and which, in figure 2, is schematically indicated by a thicker kind of line, imitates a colour substance, comparable to a real colour substance, lime or such of a coloured, for example, lime-treated real wooden floor.

In the case that a lime-treated floor must be imitated, for the component 13 a colour product of a light colour, and in particular white, is applied.

The component 13 can also comprise an active agent in combination with said colour product. As explained in the introduction, such agent may possess, for example, anti-bacterial and/or anti-static and/or dirt-repelling and/or mildew-repelling and/or fluorescent and/or phosphorescent features.

Such products, and possible carriers to apply the former thereon, in their turn are sufficiently known from the state of the art and thus will not be described here in detail.

In general, it is preferred that the indentations 12, at least in one direction, show a small dimension, for example, a width which, for the majority of the indentations 12, is less than 2 mm, and even better less than 1 mm. Also, the majority of these indentations 12 preferably is oblong, with a length varying between some millimetres and some centimetres. The depth of the indentations is random, however, of course is chosen such that no undesired damages of the surface occur during the formation thereof.

The top layer or overlay 9 may consist of a classical colourless transparent overlay. According to a particular embodiment of the invention, however, also a coloured transparent top layer or overlay 9 can be applied, as a consequence of which, as already explained, particular effects can be created.

In figures 6 to 11, schematically a method is represented for realizing a floor panel 1 according to the invention, at least for realizing the indentations and providing the component 13 therein.

In the represented form of embodiment of this method, the floor panel 1 is realized as so-called Direct Pressure Laminate (DPL). This technique allows for a smooth production, whereby in one pressing cycle, boards can be realized which already show the complete or almost complete layer structure of the end product, thus, of the floor panels 1 to be formed. This, however, does not exclude that the invention also can be applied in combination with other techniques than those applied for manufacturing DPL.

In the method represented in the figures, first, as represented in figure 6, the different layers with which one starts, are provided on top of each other. Hereby, this relates to a basic layer 17, which in its turn may consist of several layers or composite parts or not, a printed decorative layer 8, a top layer 9 and preferably also a backing layer 18. The basic layer 17 consists, for example, of a MDF/HDF board, particle board, so-called blockboard or the like. The decorative layer 8 may simply consist of printed paper, however, preferably has already been impregnated with resin beforehand. As aforementioned, the top layer 9 consists of a carrier, such as a sheet of paper, impregnated with thermosetting resin. The backing layer 18, too, consists of a resin-impregnated carrier.

Of course, also other intermediate layers can be provided, such as, for example, additional resin-impregnated layers.

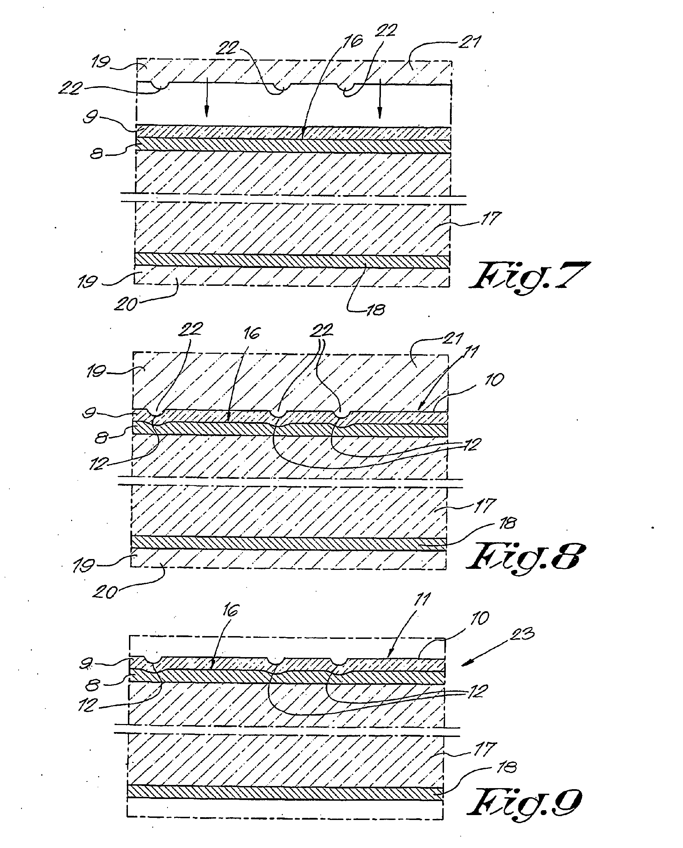

As represented in figure 7, the obtained stack of layers is brought into a heated press 19, preferably a flat press, with a lower plate 20 upon which the aforementioned stack is placed, and an upper plate 21, between which the whole is compressed. The upper plate 21 is provided with protrusions 22 or such for forming said indentations 12.

These indentations 12 are formed at that moment when the press, as illustrated in figure 8, is closed, whereas the thermosetting resin of the decorative layer 8 and the top layer 9 melt together and harden to a whole, adhered to the basic plate 17.

From the press 19, a composite board 23 is obtained as represented in figure 9, wherein, in the upper side 11, indentations 12 are present.

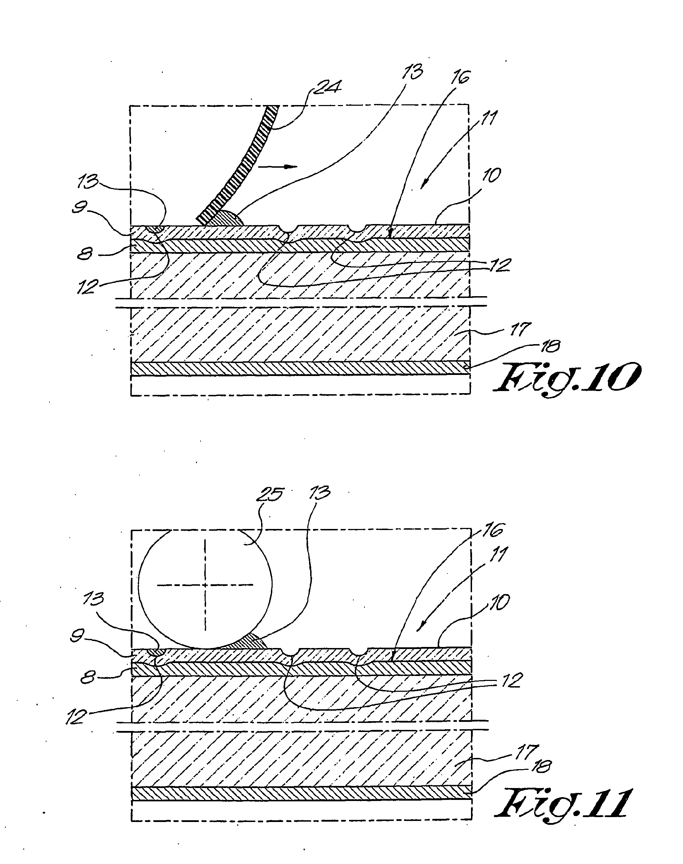

Subsequently, the component 13 is brought into these indentations. This bringing-in preferably takes place by depositing an amount of this component 13 in the indentations 12, for example, by wiping it into the indentations 12, for example, by means of doctoring, rubbing or rolling it in. Figure 10 shows how such component 13 can be provided in the indentations 12 by means of a doctor blade 24. Figure 11 shows a variant, whereby a component 13 is rolled into the indentations 12 by means of a roll 25.

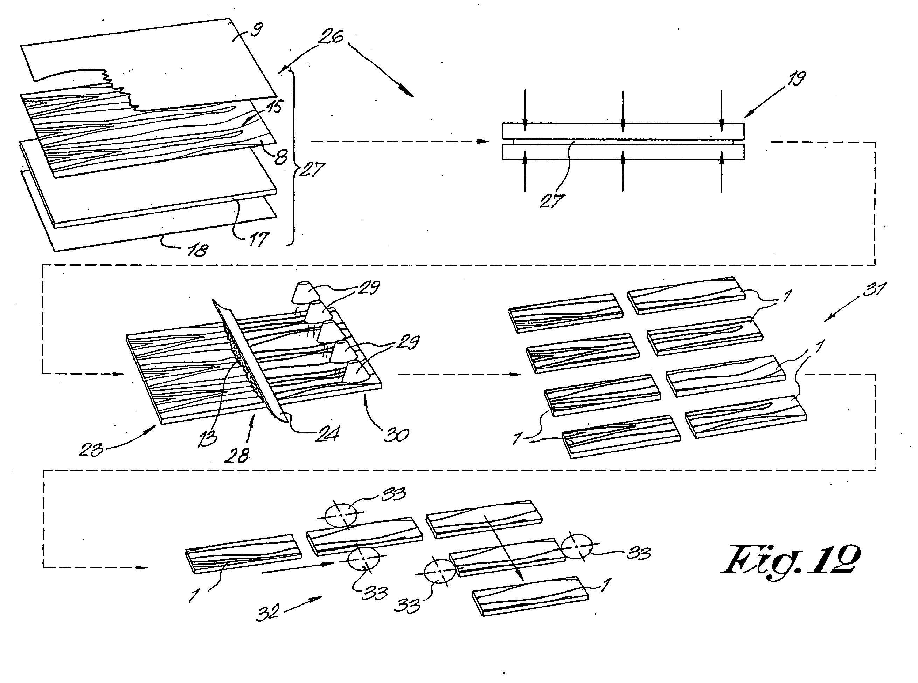

Figure 12 represents a global survey of the method. In a first step 26, a stack 27 of different layers, as aforementioned, is brought into a press 19, whereby, as explained above with reference to figures 7 to 9, boards 23 are formed which, at their surface, are provided with indentations 12. In a subsequent step 28, the component 13 is deposited in the indentations 12, which in figure 12 is indicated schematically by means of a doctor blade 24. Subsequently, the component 13 can be subjected to a drying in a forced manner, for example, by means of infrared radiation in case of thermal drying or by means of ultraviolet radiation in case of curing, for example, by means of lamps 29, which step is indicated schematically by reference 30 in figure 12. Subsequently, the boards 23 are sawn into floor panels 1, as schematically represented in step 31, after which coupling means 7 can be formed at these floor panels 1, for example, by means of the milling cutters 33 schematically represented in step 32.

It is clear that the application of the component 13 in a suitable manner possibly may be performed in several steps. So, for example, in a first step the component 13 may be excessively provided on the respective surface by means of a roll, doctor blade or the like, whereas in a second step, the excess amount, or at least a part thereof, is removed, for example, by means of a take-up roll or wiping roll. In a practical embodiment, the boards or panels are transported by means of a transport system along an entrained applicator roll and a removing roll rotating in countersense.

The applicator roll preferably has a soft surface consisting, for example, of natural rubber. At the surface of the applicator roll, a film of liquid component 13 is provided, for example, by means of a dosage roll installed next thereto, whereby this latter is situated next to the surface of the applicator roll in such a manner that an amount of liquid component can be deposited between both rolls which is carried along at the surface of the applicator roll in the form of a film. By the contact between the applicator roll and the boards or panels, the component is forced into the indentations, and part of it also remains present at the surface.

The removing roll preferably has a hard smooth surface and rotates in countersense over the boards or panels. Preferably, to this aim use is made of a chromium-plated and/or polished metal roll. Hereby, the component 13 which is situated out of the indentations substantially is taken along and finally removed from the removing roll by means of a doctor blade.

Also, a removing roll can be used which is permanently rinsed with solvent and thereby moves in countersense with a solvent film along the treated boards or panels in order to remove excess component.

It is obvious that one or more removing rolls can be used. Preferably, however, successively two removing rolls are used, namely a first conventional removing roll and a second, solvent-rinsed removing roll.

In case that a UV drying is applied, preferably Ga lamps as well as Hg lamps are applied for realizing a drying in depth as well as at the surface.

Also, after drying, a post-treatment may follow, whereby remaining component 13, which is present on the surface between the indentations, is wiped away dry, for example, brushed away. Such post-treatment is especially useful for removing a remaining tinge, formed by component 13. The brushing-off of said tinge may, for example, be performed by means of rotating brushes. Hereby, brushes provided with bristles as well as with other parts with a brushing function, such as, for example, lips of abrasive paper, may be concerned.

Possibly, one or more additional measures can be taken in order to enhance the adhesion of component 13.

One measure consists, for example, in making the upper surface of the boards or panels dust-free, for example, by means of a brushing process.

Another measure consists, for example, in heating the upper surface of the boards or panels, such that this surface becomes somewhat softer and a better adhesion is realized.

Still another measure consists in adapting the position of the wear-resistant particles in the top layer such that these particles, for example, corundum particles, will be situated closer to the surface than this usually is the case. Hereby, an improvement of the adhesion was stated which presumably is the consequence of the fact that the indentations then extend between said particles, whereby the adjoining particles then realize a better adhesion, as well as offer protection for the component 13 situated in between.

Hereby, it is advantageous to make use of an overlay of the type whereby the wear-resistant particles are incorporated in the paper instead of in the resin. Obviously, the particles hereby have the tendency to sit at one side of the paper. Usually, the overlay is placed with this side of the paper downward. By now applying the overlay, however, reversed, the particles will be situated closer to the upper surface, by which, as aforementioned, a better adhesion of the component 13 is obtained. Because a film of resin is present around the paper of the overlay, the wear-resistant particles do not border the surface, as a result of which the press plates still remain more or less protected against the abrasive effect of the wear-resistant particles.

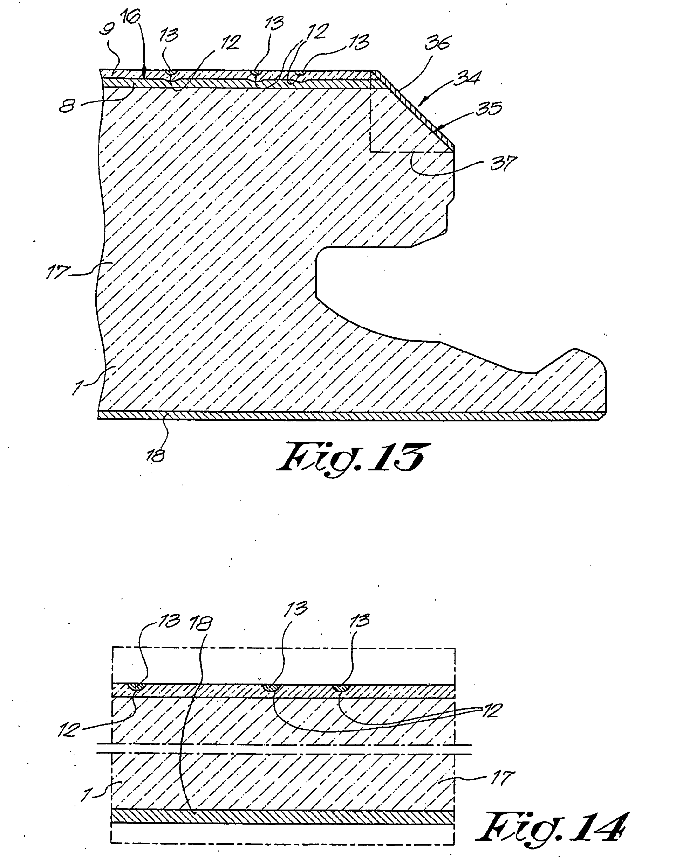

Figure 13 illustrates that, as already described in the introduction, such floor panel 1, at one or more upper edges, in this case, the upper edge 34, can be provided with a cut-away material part, whereby the surface 35, which is created by the cutting away of this material part, is at least partially provided with a finish, in such a manner that the appearance of the surface 35 matches the effect which is obtained by the colour product applied in said indentations 12. In figure 13, this is a separate covering layer 36 provided on the surface 35, for example, by means of transfer print.

According to a variant, instead of using transfer print, also a coating can be applied whereby the surface 35 is treated by means of a colouring substance, such as a paint, varnish, coloured impregnating agent or the like, whereby this can be provided on the surface 35 in any manner, for example, by atomising, sputtering, spraying, by means of a roll or by means of a felt-tip pencil.

Preferably, in the latter case the surface 35 is coloured with a colouring product of the same colour, or almost the same colour, as the colouring product used for said component 13, or even component 13 itself can be used for the colouring thereof.

The aforementioned is particularly useful in combination with floor panels 1 whereby, by the cut-away parts, a so-called "chamfer" is formed. The cut-away parts, however, also may have another shape, for example, a rectangular shape, as indicated in dash-dotted line 37, for imitating a groove between the laid floor panels 1.

The top layer 9 must not necessarily be a thermosetting resin. So, for example, the aforementioned indentations to be coloured can be provided in a transparent lacquer layer or the like, which is situated directly or indirectly above the printed decorative layer.

Generally, it is noted that the provision of indentations in said layers does not explicitly mean that these indentations thereby extend exclusively in said layer. In fact, the indentations may extend throughout different layers and/or create deformations therein. In case of layers pressed upon each other, such as the aforementioned decorative layer and overlay, such layers, during pressing, flow into each other, such that in the end product, so to speak, one layer is obtained and, thus, it becomes difficult to determine up to which layer the indentations are extending.

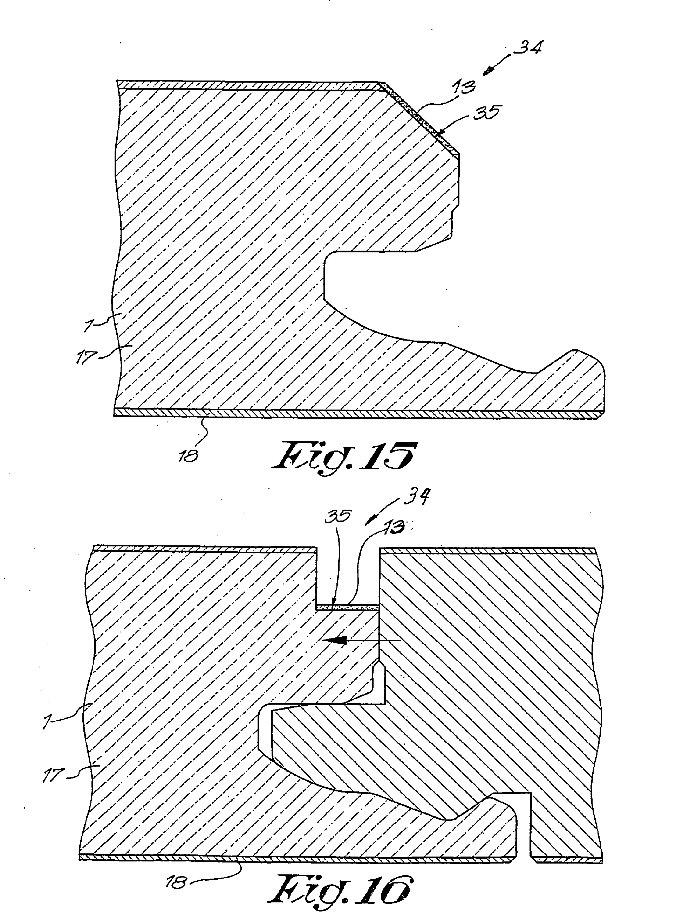

According to a particular aspect, and in combination with the main aspect of the invention, the floor panel has a top layer based on synthetic material, whereby this floor panel, at its upper side, whether in said synthetic material or not, shows deepened parts, at which a component is provided which comprises an active agent. These deepened parts may consist exclusively of indentations 12, as illustrated in figure 14, or exclusively of surfaces 35 which are obtained by cut-away parts, for example, as illustrated in figures 15 and 16, or also by a combination of these two possibilities.

It is clear that the application of such active component in this indentations may be performed in a manner analogous to that described by means of figures 5 to 12. However, other techniques are not excluded.

Another technique for providing a component 13 i.e. a colouring agent and/or active agent in indentations 12, after these indentations 12 have been formed, according to the present invention consists in that the entire surface of the boards 23, or at least major parts thereof, are covered entirely or almost entirely with the component 13 and subsequently these boards 23 are cleaned such that the component 13 substantially remains present in the indentations 12 only, whereas the component 13 situated on the intermediate parts 14 substantially is removed. This cleaning can be realized in different manners, for example, by wiping off, brushing or the like.

According to a variant of this technique, one will work in at least two steps, whereby in the first step, one provides for that a first agent remains exclusively, or almost exclusively, in the indentations 12 and subsequently, in the second step, a second agent is provided on the surface which can react and/or which properly adheres to the first agent, however, reacts little or not at all or adheres little or not at all to the parts 14 situated between the indentations 12. These technique is particularly advantageous when using two-component resins to this aim. In such case, the board 23 first can be covered with the first component, which preferably is clear transparent, with the result that the layer formed by this agent is thicker at the location of the indentations 12 than at the location of the parts 14. Subsequently, this first component can be partially evaporated, such that the thinner quantities on the parts 14 are completely or almost completely removed, whereas a certain amount of the thicker quantities at the location of the indentations 12 still remains present. Thereafter, the second component, of the resin which only reacts with the first component, is applied on the board 23 and the resin is cured. Hereby, a curing is exclusively obtained at the locations where the first as well as the second components are present, i.e. only, or almost only, in the indentations 12. Subsequently, the amount of second component which has not reacted with the first component can simply be removed by washing off, wiping off, scraping off or the like.

It is clear that the reacted first and second components of the two-component resin then together form the intended component 13.

Also, it is not excluded to apply a component 13 in the indentations 12, which component, exclusively at the location of the indentations 12, is covered with an additional layer. So, for example, may a colouring product be provided at the bottom of the indentations 12, whereas thereabove a transparent layer is deposited in order to give additional characteristics to the whole. Such additional characteristics may consist, for example, in that a protective layer is formed over the colouring product or that an active component is integrated in the transparent layer.

The invention does not exclude that component 13 is not only present in the indentations. The product 13 may be present on the parts 14 to a restricted extent, for example, in the form of small component residues which have remained on the surface.

The present invention is in no way limited to the forms of embodiment described by way of example and represented in the figures, however, such floor panel, as well as the method for manufacturing such floor panel, can be realized according to various variants, without leaving the scope of the invention.

So, for example, it is not excluded to apply the component 13 in the indentations after the sawing of the boards 23, and even after milling or the like, as a consequence of which the extent of the equipment required to this aim can be restricted. If this takes place after milling, or in between certain milling cycles, an already formed possible "chamfer" or, thus, bevelled edge, or another deepened part can be provided with a component 13 at the same time as the indentations.

By first sawing or cutting the boards 23 into floor panels and by providing the component 13 before the forming of the coupling means, it is excluded that component 13 lands onto the coupling means.

It is noted that in case that the component 13 first is provided at the boards and only afterwards floor panels are produced thereof, it is not excluded that the boards are cut to smaller boards preceding to the application of the component.

Also, the invention relates to a "method" for imitating a coloured surface in laminate panels, more particularly for imitating coloured wood, whereby one proceeds as described in the aforegoing.

It is clear that the invention is intended in particular for being used in combination with floor panels of the type consisting of so-called DPL (Direct Pressure Laminate).

## Claims

1. Floor panel, of the type consisting of a laminate panel which panel comprises a decorative layer (8) which is provided with a printed pattern (15), said pattern (15) representing a wood pattern, **characterized in that** the floor panel (1) is provided with a coloured or "patinated" appearance, which is realized at least by the combination of, on the one hand, indentations (12) provided in the floor panel in function of the printed wood pattern, more particularly indentations which follow the lines of the wood pattern and/or represent the wood pores, and, on the other hand, a component (13) in the form of a colour product which is provided in said indentations, said component providing said colouring or patinating effect to the pattern (15) of the decorative layer (8), thereby imitating a coloured wooden surface.

2. Floor panel according to claim 1, **characterized in that** said component (13) is obtained **in that** it has been provided in those indentations after the provision of the indentations.

3. Floor panel according to claim 1 or 2, **characterized in that** the panel comprises a top layer (9) forming the upper surface (10) of the floor panel (1), more particularly a so-called overlay, whereby this top layer (9), or thus, overlay is realized on the basis of a thermosetting resin, wherein said indentations (12) are formed in said upper surface (10).

4. Floor panel according to claim 3, **characterized in that** said top layer (9) is a layer based on melamine resin.

5. Floor panel according to any of the preceding claims, **characterized in that** said colour product is a paint or the like.

6. Floor panel according to any of the preceding claims, **characterized in that** by means of said component a lime-treated floor is imitated, the component being of a light colour, in particular white.

7. Floor panel according to any of the preceding claims, **characterized in that** the floor panel (1), at least at one upper edge (34), is provided with a cut-away material part, whereby the surface (35) which is created by cutting away this material part is provided, at least partially, with a finish, as a consequence of which the appearance of the surface (35) is adapted to the effect obtained by the colour product in said indentations (12).

8. Floor panel according to claim 7, **characterized in that** said surface (35) is coloured at least partially with a colour product of the same colour, or almost the same colour, as the colour product used for said component (13).

9. Floor panel according to any of the preceding claims, **characterized in that** it comprises a coloured transparent overlay, which then preferably forms said top layer (9).

10. Floor panel according to claim 9, **characterized in that** said overlay is coloured **in that** it is formed on the basis of coloured resin.

11. Floor panel according to claim 9 or 10 **characterized in that** the coloured overlay, together with said colour product, commonly contribute to an imitation of a "coloured" or "patinated" floor.

12. Floor panel according to any of the preceding claims, **characterized in that** the indentations (12) show a small dimension in at least one direction, more particularly a width which, for the major part of such indentations (12), is less than 2 mm, and even better less than 1 mm.

13. Floor panel according to any of the preceding claims, **characterized in that** said component (13) comprises at least one active agent.

14. Floor panel according to claim 13, **characterized in that** the active agent is a product with one or more of the following features: anti-bacterial, anti-static, dirt-repellent, mildew-repellent, fluorescent, phosphorescent.

15. Floor panel according to any of the preceding claims, **characterized in that** it is realized as DPL (Direct Pressure Laminate).

16. Floor panel according to any of the preceding claims, **characterized in that** said component (13) is present in the indentations (12) in the form of an amount wiped into the indentations (12) and cured, more particularly an amount which is brought into the indentations (12) **in that** it is rolled thereinto, wiped thereinto, doctored thereinto or the like.

17. Floor panel according to any of the preceding claims, **characterized in that** said component (13) is situated at the location of the indentations (12), at the exterior of the floor panel (1), in other words, is not covered by means of possible further layers.

18. Method for manufacturing a floor panel (1) according to any of the preceding claims, **characterized in that** this method comprises at least two main steps, on one hand, a first step wherein one or more basic layers, a decorative layer (8) and a transparent so-called overlay, by means of a thermosetting synthetic material, are pressed together to a whole in a heated press, whereby, simultaneously with the pressing, indentations (12) are formed in the upper side (11), and, on the other hand, a second step whereby said component (13) in the form of a colour product is brought into the indentations (12).

19. Method according to claim 18, **characterized in that** said component (13) is brought into the indentations (12) in the form of an amount deposited therein.

20. Method according to claim 18 or 19, **characterized in that** one starts with larger boards (23), in other words, boards (23) from which several floor panels can be manufactured; that first these boards (23) are formed and provided with indentations (12); that subsequently said component (13) is brought into the indentations (12); and that only afterwards separate floor panels are formed from the boards (23).

21. Method according to claim 18 or 19, **characterized in that** one starts with larger boards (23), in other words, boards (23) from which several floor panels can be manufactured; that first these boards (23) are formed and provided with indentations (12); that subsequently separate floor panels are formed from the boards (23), after which a component (13), as aforementioned, is brought into the indentations (12).

## Patentansprüche

1. Fußbodenpaneel, des Typs, bestehend aus einem Laminatpaneel, welches Paneel eine dekorative Schicht (8) umfasst, die mit einem gedruckten Motiv (15) versehen ist, wobei das Motiv (15) ein Holzmotiv darstellt, **dadurch gekennzeichnet, dass** das Fußbodenpaneel (1) mit einem eingefärbten oder "patinierten" Aussehen versehen ist, das mindestens durch die Kombination von einerseits eingedrückten Vertiefungen (12), die in Funktion des gedruckten Holzmotivs in dem Fußbodenpaneel angebracht sind, spezieller eingedrückten Vertiefungen, die den Linien des Holzmotivs folgen und/oder die Holzporen darstellen, und andererseits einer Komponente (13) in Form eines Farbprodukts, das in den eingedrückten Vertiefungen angebracht ist, verwirklicht ist, wobei die Komponente den vorgenannten einfärbenden oder patinierenden Effekt für das Motiv (15) der dekorativen Schicht (8) vorsieht, wodurch eine eingefärbte Holzoberfläche imitiert wird.

2. Fußbodenpaneel nach Anspruch 1, **dadurch gekennzeichnet, dass** die Komponente (13) dadurch erhalten ist, dass sie nach dem Anbringen der eingedrückten Vertiefungen in diesen eingedrückten Vertiefungen angebracht worden ist.

3. Fußbodenpaneel nach Anspruch 1 oder 2, **dadurch gekennzeichnet, dass** das Paneel eine oberste Lage (9) umfasst, die die Oberseite (10) des Fußbodenpaneels (1) bildet, spezieller ein sogenanntes Overlay, wobei diese oberste Lage (9) oder somit das Overlay auf Basis eines thermoaushärtenden Harzes verwirklicht ist, wobei die vorgenannten eingedrückten Vertiefungen (12) in der vorgenannten Oberseite (10) ausgebildet sind.

4. Fußbodenpaneel nach Anspruch 3, **dadurch gekennzeichnet, dass** die oberste Lage (9) eine auf Melaminharz basierte Lage ist.

5. Fußbodenpaneel nach einem der vorgenannten Ansprüche, **dadurch gekennzeichnet, dass** das Farbprodukt eine Farbe oder dergleichen ist.

6. Fußbodenpaneel nach einem der vorgenannten Ansprüche, **dadurch gekennzeichnet, dass** mittels der vorgenannten Komponente ein gekalkter Fußboden imitiert wird, wobei die Komponente von einer hellen Farbe, insbesondere weiß, ist.

7. Fußbodenpaneel nach einem der vorgenannten Ansprüche, **dadurch gekennzeichnet, dass** das Fußbodenpaneel (1) mindestens an einer Oberkante (34) mit einem weggeschnittenen Materialteil versehen ist, wobei die durch Wegschneiden dieses Materialteils erzeugte Oberfläche (35) mindestens teilweise mit einem Finish versehen ist, wodurch das Aussehen der Oberfläche (35) an den durch das Farbprodukt in den vorgenannten eingedrückten Vertiefungen (12) erhaltenen Effekt angepasst ist.

8. Fußbodenpaneel nach Anspruch 7, **dadurch gekennzeichnet, dass** die vorgenannte Oberfläche (35) mindestens teilweise mit einem Farbprodukt von derselben Farbe oder nahezu derselben Farbe wie das für die vorgenannte Komponente (13) verwendete Farbprodukt eingefärbt ist.

9. Fußbodenpaneel nach einem der vorgenannten Ansprüche, **dadurch gekennzeichnet, dass** es ein eingefärbtes transparentes Overlay, das dann bevorzugt die vorgenannte oberste Lage (9) bildet, umfasst.

10. Fußbodenpaneel nach Anspruch 9, **dadurch gekennzeichnet, dass** das vorgenannte Overlay dadurch eingefärbt ist, dass es auf Basis von gefärbtem Harz ausgebildet ist.

11. Fußbodenpaneel nach Anspruch 9 oder 10, **dadurch gekennzeichnet, dass** das eingefärbte Overlay, zusammen mit dem vorgenannten Farbprodukt, gemeinsam zu einer Imitation eines "eingefärbten" oder "patinierten" Fußbodens beiträgt.

12. Fußbodenpaneel nach einem der vorgenannten Ansprüche, **dadurch gekennzeichnet, dass** die eingedrückten Vertiefungen (12) in mindestens einer Richtung eine geringe Abmessung aufweisen, spezieller eine Breite, die für den größten Teil solcher eingedrückten Vertiefungen (12) weniger als 2 mm und noch besser weniger als 1 mm beträgt.

13. Fußbodenpaneel nach einem der vorgenannten Ansprüche, **dadurch gekennzeichnet, dass** die vorgenannte Komponente (13) mindestens ein aktives Mittel umfasst.

14. Fußbodenpaneel nach Anspruch 13, **dadurch gekennzeichnet, dass** das aktive Mittel ein Produkt mit einer oder mehreren der folgenden Eigenschaften ist: antibakteriell, antistatisch, schmutzabweisend, schimmelabweisend, fluoreszierend, phosphoreszierend.

15. Fußbodenpaneel nach einem der vorgenannten Ansprüche, **dadurch gekennzeichnet, dass** es als DPL (Direct Pressure Laminate) ausgeführt ist.

16. Fußbodenpaneel nach einem der vorgenannten Ansprüche, **dadurch gekennzeichnet, dass** die vorgenannte Komponente (13) in den eingedrückten Vertiefungen (12) in Form einer in die eingedrückten Vertiefungen (12) eingestrichenen und ausgehärteten Menge vorliegt, spezieller einer Menge, die in die eingedrückten Vertiefungen (12) eingebracht ist, indem sie in diese hineingerollt, hineingestrichen, hineingerakelt ist oder dergleichen.

17. Fußbodenpaneel nach einem der vorgenannten Ansprüche, **dadurch gekennzeichnet, dass** die vorgenannte Komponente (13) an der Stelle der eingedrückten Vertiefungen (12), an der Außenseite des Fußbodenpaneels (1), gelegen ist, mit anderen Worten, nicht mittels eventueller weiterer Lagen abgedeckt ist.

18. Verfahren zur Herstellung eines Fußbodenpaneels (1) gemäß einem der vorgenannten Ansprüche, **dadurch gekennzeichnet, dass** dieses Verfahren mindestens zwei wesentliche Schritte umfasst, einerseits einen ersten Schritt, worin eine oder mehrere Basislagen, eine dekorative Schicht (8) und ein transparentes, sogenanntes Overlay mittels eines thermoaushärtenden Kunststoffs in einer beheizten Presse zu einem Ganzen zusammengepresst werden, wobei gleichzeitig mit dem Pressen eingedrückte Vertiefungen (12) in der Oberseite (11) geformt werden, und andererseits einen zweiten Schritt, wobei die vorgenannte Komponente (13) in Form eines Farbprodukts in die eingedrückten Vertiefungen (12) eingebracht wird.

19. Verfahren nach Anspruch 18, **dadurch gekennzeichnet, dass** die vorgenannte Komponente (13) in die eingedrückten Vertiefungen (12) in Form einer darin deponierten Menge eingebracht wird.

20. Verfahren nach Anspruch 18 oder 19**, dadurch gekennzeichnet, dass** von größeren Platten (23) ausgegangen wird, mit anderen Worten, Platten (23), aus denen mehrere Fußbodenpaneele gefertigt werden können; dass erst diese Platten (23) geformt und mit eingedrückten Vertiefungen (12) versehen werden; dass anschließend die vorgenannte Komponente (13) in die eingedrückten Vertiefungen (12) eingebracht wird; und dass erst danach separate Fußbodenpaneele aus den Platten (23) gebildet werden.

21. Verfahren nach Anspruch 18 oder 19, **dadurch gekennzeichnet, dass** von größeren Platten (23) ausgegangen wird, mit anderen Worten, Platten (23), aus denen mehrere Fußbodenpaneele gefertigt werden können; dass erst diese Platten (23) geformt und mit eingedrückten Vertiefungen (12) versehen werden; dass anschließend separate Fußbodenpaneele aus den Platten (23) gebildet werden, wonach eine Komponente (13), wie vorgenannt, in die eingedrückten Vertiefungen (12) eingebracht wird.

## Revendications

1. Panneau de sol, du type constitué par un panneau stratifié, ledit panneau comprenant une couche décorative (8) qui est munie d'un motif imprimé (15), ledit motif (15) représentant un motif rappelant le bois, **caractérisé en ce que** le panneau de sol (1) est muni d'un aspect coloré ou « patiné » qui est réalisé au moins par la combinaison, d'une part d'indentations (12) prévus dans le panneau de sol en fonction du motif imprimé rappelant le bois, plus particulièrement des indentations qui suivent les lignes du motif rappelant le bois et/ou qui représente les porosités du bois, et, d'autre part, d'un composant (13) sous la forme d'un produit de couleur qui est prévu dans lesdites indentations, ledit composant conférant ledit effet de coloration ou de patinage au motif (15) de la couche décorative (8), pour ainsi imiter une surface en bois colorée.

2. Panneau de sol selon la revendication 1,
**caractérisé en ce qu'**on obtient ledit composant (13) **en ce qu'**il est prévu dans lesdites indentations après avoir fourni les indentations.

3. Panneau de sol selon la revendication 1 ou 2, **caractérisé en ce que** le panneau comprend une couche de sommet (9) formant la surface supérieure (10) du panneau de sol (1), plus particulièrement ce que l'on appelle un revêtement, cette couche de sommet (9), partant ce revêtement étant réalisé sur base d'une résine thermodurcissable, lesdites indentations (12) étant formées dans ladite surface supérieure (10).

4. Panneau de sol selon la revendication 3,
**caractérisé en ce que** ladite couche de sommet (9) est une couche à base de résine de mélamine.

5. Panneau de sol selon l'une quelconque des revendications précédentes, **caractérisé en ce que** ledit produit de couleur est une peinture ou analogue.

6. Panneau de sol selon l'une quelconque des revendications précédentes, **caractérisé en ce que**, au moyen dudit composant, on imite un sol traité à la chaux, le composant étant d'une couleur claire, en particulier de couleur blanche.

7. Panneau de sol selon l'une quelconque des revendications précédentes, **caractérisé en ce que** le panneau de sol (1), au moins à un bord supérieur (34), est muni d'une partie de matière éliminée par découpe, la surface (35) que l'on obtient par élimination par découpe de cette partie de matière est munie, au moins en partie, d'une finition, en conséquence de quoi l'aspect de la surface (35) est adapté à l'effet obtenu par le produit de couleur dans lesdites indentations (12).

8. Panneau de sol selon la revendication 7,
**caractérisé en ce que** ladite surface (35) est colorée, au moins en partie, avec un produit de couleur possédant la même couleur, ou pratiquement la même couleur que celle du produit de couleur utilisé pour ledit composant (13).

9. Panneau de sol selon l'une quelconque des revendications précédentes, **caractérisé en ce qu'**il comprend un revêtement transparent coloré, qui forme alors de préférence ladite couche de sommet (9).

10. Panneau de sol selon la revendication 9,
**caractérisé en ce que** ledit revêtement est coloré par le fait qu'il est formé sur base d'une résine colorée.

11. Panneau de sol selon la revendication 9 ou 10, **caractérisé en ce que** le revêtement coloré, conjointement avec ledit produit de couleur, contribuent ensemble à une imitation d'un sol « coloré » ou d'un sol « patiné ».

12. Panneau de sol selon l'une quelconque des revendications précédentes, **caractérisé en ce que** les indentations (12) présentent une petite dimension dans au moins une direction, plus particulièrement une largeur qui, pour la majeure partie desdites indentations (12), est inférieure à 2 mm, encore mieux inférieure à 1 mm.

13. Panneau de sol selon l'une quelconque des revendications précédentes, **caractérisé en ce que** ledit composant (13) comprend au moins un agent actif.

14. Panneau de sol selon la revendication 13,
**caractérisé en ce que** l'agent actif est un produit possédant une ou plusieurs des caractéristiques ci-après : une caractéristique antibactérienne, une caractéristique antistatique, une caractéristique repoussant la saleté, une caractéristique répulsive pour le mildiou, une caractéristique fluorescente, une caractéristique phosphorescente.

15. Panneau de sol selon la revendication 9,
**caractérisé en ce qu'**il est réalisé sous la forme d'un DPL (stratifié obtenu par pression directe).

16. Panneau de sol selon l'une quelconque des revendications précédentes, **caractérisé en ce que** ledit composant (13) est présent dans les indentations (12) sous la forme d'une quantité appliquée par essuyage dans les indentations (12) et durcie, plus particulièrement une quantité qui est amenée dans les indentations (12) en y étant introduite au rouleau, en y étant introduite par essuyage, en y étant introduite à la racle ou analogue.

17. Panneau de sol selon l'une quelconque des revendications précédentes, **caractérisé en ce que** ledit composant (13) est situé à l'endroit des indentations (12), à l'extérieur du panneau de sol (1), en d'autres termes, n'est pas recouvert par d'autres couches éventuelles.

18. Procédé pour fabriquer un panneau de sol (1) selon l'une quelconque des revendications précédentes, **caractérisé en ce que** ce procédé comprend au moins deux étapes principales, d'une part, une première étape dans laquelle une ou plusieurs couches de base, une couche décorative (8) et ce que l'on appelle un revêtement transparent, au moyen d'une matière synthétique thermodurcissable, sont comprimés ensemble pour former un tout dans une presse chauffée, procédé par lequel, de manière simultanée avec la compression, des indentations (12) sont formées dans le côté supérieur (11) et, d'autre part, une deuxième étape dans laquelle ledit composant (13), sous la forme d'un produit de couleur, est introduit dans les indentations (12).

19. Procédé selon la revendication 18, **caractérisé en ce que** ledit composant (13) est introduit dans les indentations (12) sous la forme d'une quantité qui y est déposée.

20. Procédé selon la revendication 18 ou 19,
**caractérisé en ce qu'**on commence avec les plus grandes planches (23), en d'autres termes avec des planches (23) à partir desquelles on peut fabriquer plusieurs panneaux de sol ; **en ce que**, dans un premier temps, ces planches (23) sont façonnées et munies d'indentations (12) ; **en ce que**, par la suite, ledit composant (13) est introduit dans les indentations (12) ; et **en ce que**, seulement après, des panneaux de sol séparés sont réalisés à partir des planches (23).

21. Procédé selon la revendication 18 ou 19,
**caractérisé en ce qu'**on commence avec les plus grandes planches (23), en d'autres termes avec des planches (23) à partir desquelles on peut fabriquer plusieurs panneaux de sol ; **en ce que**, dans un premier temps, ces planches (23) sont façonnées et munies d'indentations (12) ; **en ce que**, par la suite, des panneaux de sol séparés sont réalisés à partir des planches (23) ; après quoi, un composant (13), tel que mentionné ci-dessus, est introduit dans les indentations (12).
